Europäisches Patentamt

European Patent Office

Office européen des brevets

(11) Publication number: **0 269 576**
**A2**

(12) # EUROPEAN PATENT APPLICATION

(21) Application number: 87830203.3

(51) Int. Cl.⁴: **B 03 B 9/00**

(22) Date of filing: 29.05.87

(30) Priority: 18.11.86 IT 357986

(43) Date of publication of application:
01.06.88 Bulletin 88/22

(84) Designated Contracting States:
AT BE CH DE ES FR GB GR LI NL SE

(71) Applicant: **LIBRA S.A.**
**Strada Cardio, 14**
**I-47031 Dogana (SM)**

(72) Inventor: **Casaglia, Luigi**
**Via Trieste, 38**
**I-47037 Rimini (Forli) (IT)**

(74) Representative: **Lanzoni, Luciano**
**c/o BUGNION S.p.A. Via Farini, 37**
**I-40124 Bologna (IT)**

(54) Equipment and method for the separate recovery of coarse aggregates, fine aggregates and residual water and cement from concrete mix.

(57) The equipment disclosed comprises a plurality of nozzles (10) serving to flood the concrete mix prior to separation of the coarse aggregates by a first wide mesh screen (1); these aggregates are collected at a first recovery station (6), whereas the finer aggregates fall together with the water and cement into a first tank (2) below. The contents of this tank are maintained at a constant level, and fed by a pump (11) into a hydrocyclone (3), whereupon fine aggregates are separated from the water and cement, discharged by the cyclone outlet (4) onto a second, fine mesh screen (5) directly below, and conveyed toward a second recovery station (7), and the water and cement residue is routed into a second tank (8), agitated, and recovered at a third station (9).
The method thus implemented is also claimed.

EP 0 269 576 A2

## Description

Equipment and method for the separate recovery of coarse aggregates, fine aggregates and residual water and cement from concrete mix.

The invention relates to equipment, and to a method, for the separate recovery of coarse aggregates, fine aggregates and residual water and cement from unused concrete mix.

It is common knowledge that concrete mixing plant, whether stationary or mobile, must be washed out thoroughly at the end of the work cycle in order to remove unused residual concrete from inside.

The waste produced by washing cannot be jettisoned, as such a course of action would constitute both a financial loss and an environmental pollution hazard.

Clearly, mixed concrete cannot be reutilized, and accordingly, attempts are made to recover the single constituents for subsequent use in another mix.

To this end, systems have been devised that separate the constituents of concrete, recovering aggregates (gravel and sand) on the one hand, and the binding agents (water and cement) on the other.

Aggregates thus separated can be used again; cement recovered with the water will have lost its binding properties however, but can be reutilized as super fine aggregate for concrete mixes of the type which make use of spent cement.

Systems conventionally adopted for separating the constituents of concrete in this manner are embodied according to two basic technological principles.

In a first method, concrete still lying in the mixer is rendered fluid initially by adding water, and discharged onto a rubber conveyor belt the profile of which exhibits a concave central area, not of any great depth, but of generous length. Concrete thus poured onto the central area of the belt is flooded with water, abundantly, so that the excess of water causes the aggregates to separate from the cement and settle on the concave bed of the conveyor whilst the water and cement spill toward the rear end of the belt and drop into a collection tank below. Aggregates settling on the belt are conveyed forward and discharged at a recovery station.

In a second method, the concrete is discharged from the mixer into a hopper, having been flooded with water. Addition of more water internally of the hopper causes the aggregates to separate and fall to the bottom, whilst the water and cement run away through an outlet located at the top of the hopper and into a collection tank below.

The aggregates are drawn off by a screw conveyor, which is angled upward and picks up from the bottom of the hopper; the material is thus carried upward, draining in the process, and discharged onto a heap located at the opposite side of the hopper from the pick-up point.

Both of the above methods are beset by discernable drawbacks.

A first drawback stems from the fact that systems embodied according to the principles outlined above do not permit of separating fine aggregates, such as sand, from coarse aggregates such as gravel.

A second drawback consists in the high manufacturing and running costs involved in systems of the type. In effect, such conventional systems are permanent installations, generally requiring the construction of costly reinforced concrete tanks; furthermore, their moving parts handle highly abrasive materials and are thus subject to early wear, which signifies frequent replacements.

Equipment according to the invention, as disclosed and characterized in the appended claims, is compact in embodiment, can be transported by a road haulage vehicle, and offers high resistance to abrasion; its essential features are those of low capital outlay and running costs, and the facility of separating fine aggregates (sand) both from coarser aggregates (gravel) and from the water and cement.

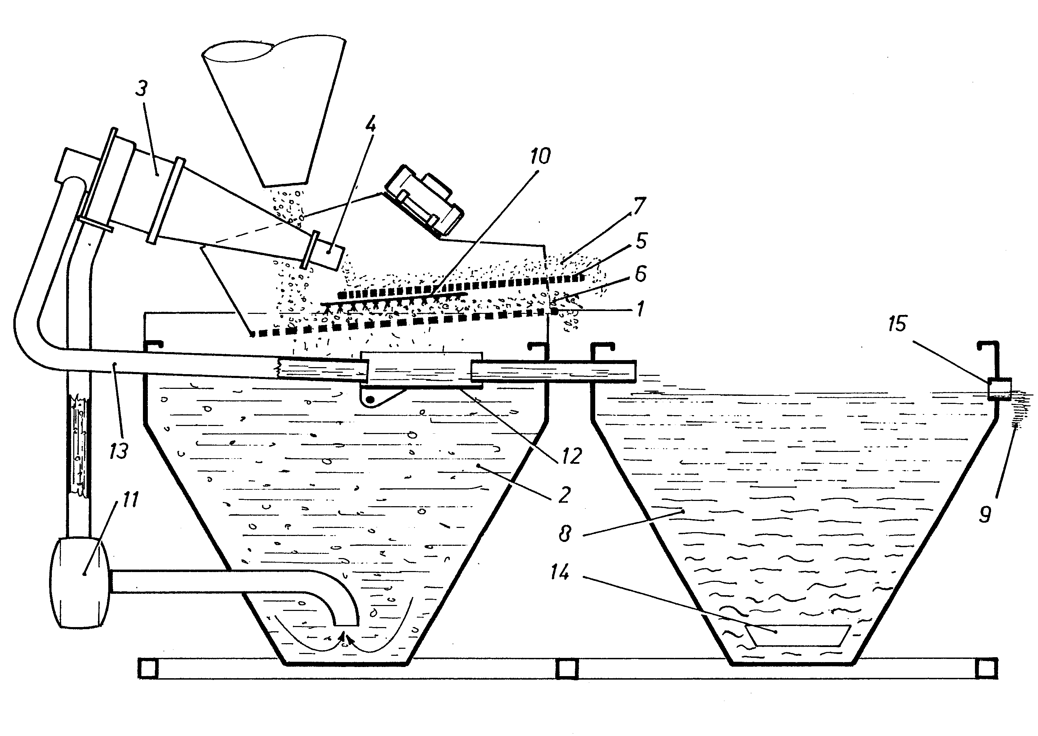

The invention will now be described in detail, by way of example, with the aid of the accompanying drawing, which is a schematic representation of the equipment as a whole, and of its component parts.

Equipment according to the invention consists in a first tank 2 above which at least two vibrating screens 1 and 5 are positioned, the first with a relatively wide mesh, the second with a finer mesh. Concrete discharged from the mixer truck is dropped onto the vibrating screens, and more exactly, onto the wide mesh screen 1.

10 denotes a plurality of nozzles located above the wide mesh screen 1, from which water is sprayed under pressure at the concrete occupying the screen in such a way as to separate the cement binder from the aggregates.

Aggregates of size larger than that of the mesh of the screen 1 are washed free by the water sprayed from the nozzles 10, and conveyed off to a recovery station 6.

3 denotes a hydrocyclone the discharge outlet 4 of which is positioned above the fine mesh screen 5. The cyclone is in receipt of fine aggregates, water and cement drawn from the tank 2 by a pump 11, and brings about their separation.

Fine aggregates thus separated are discharged from the outlet 4 onto the fine mesh vibrating screen 5 only, whereas the mixture of water and cement is taken out through a pipeline 13 and deposited in a second, holding tank 8, which is provided with an agitator 14 that prevents solidification occurring, and with a top outlet 15 by way of which the liquid runs off to a recovery station 9.

The fine aggregates deposited on the second screen 5 are conveyed toward a relative recovery station 7, draining off in the process due to the vibratory motion of the screen, which shakes out any residual water and cement into the tank 2 below.

For the cyclone to operate faultlessly, the level in the supply tank 2 must be maintained constant, and to this end, a flow-diverting device 12 is installed on the pipeline 13, the function of which is to replenish the level in the tank 2, when low, with water and cement exhausted from the cyclone.

The method implemented with equipment thus embodied may be summarized in the following steps:

A - discharge of concrete mix onto the wide mesh vibrating screen; flooding of the mix in order to separate coarse aggregates, which are recovered at the first station 6; gravitation of fine aggregates, water and cement into the supply tank 2 beneath;

B - pumping of the contents of the supply tank 2, namely fine aggregates, water and cement, into the hydrocyclone 3; separation of the fine aggregates from the water and the cement; discharge of the fine aggregrates from the hydrocylcone 3 onto the fine mesh vibrating screen 5; draining of residual water and cement from the fine aggregates back into the supply tank 2, and recovery of the aggregates at the second station 7; discharge of the water and cement separated by the hydrocyclone 3 into the holding tank 8, where continuous agitation is effected to prevent solidification; transfer of the water and cement in the holding tank 8 toward a third recovery station 9.

## Claims

1) Equipment for the separate recovery of coarse aggregates, fine aggregates and residual water and cement from concrete mix, characterized
-in that it comprises a first tank (2); at least two vibrating screens (1, 5) positioned above the first tank, of which the first affords a wide mesh and the second a finer mesh; a plurality of nozzles (10) located above the first screen (1), from which water is sprayed under pressure; and a hydrocyclone (3);
-in that concrete mix dropped onto the first screen (1) is flooded by the nozzles (10) and vibrated in order to separate coarse aggregates for collection at a first recovery station (6) and allow remaining constituents of the mix to drop into the first tank (2) below;
-and in that the contents of the first tank (2) are maintained at a constant level while being drawn off by a pump (11) and supplied to the hydrocyclone (3), which separates fine aggregates from the water and cement, whereupon the fine aggregates are discharged from the outlet (4) of the hydrocyclone onto the second screen (5), vibrated, and collected at a second recovery station (7), whilst water and cement are directed through a pipeline (13) to a second, holding tank (8) that is fitted with an agitator (14) and provided with an outlet (15) to a third recovery station (9) at which the water and cement are collected.

2) Equipment as in claim 1, wherein a flow-diverting device (12) is installed on the pipeline (13) at a point upstream of the second, holding tank (8), the function of which is to replenish the level in the first tank (2), when low, by redirecting the flow of water and cement from the upstream stretch of the pipeline (13) back into the first tank.

A method for the separate recovery of coarse aggregates, fine aggregates and residual water and cement from concrete mix, characterized in that it comprises the following steps:

A - discharge of the concrete mix onto a wide mesh vibrating screen (1) and simultaneous flooding of the mix in order to separate the cement binder from the aggregates, whereupon coarse aggregates retained by the wide mesh vibrating screen are recovered at a first station (6) and the remaining fine aggregates, water and cement drop into a supply tank (2) below, the contents of which are maintained at a constant level;

B - pumping of the fine aggregates, water and cement from the supply tank (2) into a hydrocyclone (3), which separates the fine aggregates from the water and the cement and discharges them from an outlet (4) onto at least one second, fine mesh vibrating screen (5) designed to retain fine aggregates only and convey them toward a second recovery station (7) in such a way that any residual water and cement is drained back into the supply tank (2) during the passage from the cyclone outlet (4) to the recovery station (7), whereas the water and cement discharged from the hydrocyclone (3) is routed directly into a second, holding tank (8), agitated to prevent its solidification, and collected ultimately at a third and last recovery station (9).

0269576